# EUROPEAN PATENT APPLICATION

(11) **EP 3 046 036 A1**
(43) Date of publication of application: **20.07.2016**
(21) Application number: 14843714.8
(22) Date of filing: 17.03.2014
(51) Int. Cl.: G06F 17/30

(54) **DIGITAL INFORMATION ANALYSIS SYSTEM, DIGITAL INFORMATION ANALYSIS METHOD, AND DIGITAL INFORMATION ANALYSIS PROGRAM**

(30) Priority: 11.09.2013 JP 2013188296
(71) Applicant: Ubic, Inc., Minato-ku, Tokyo 108-0075 (JP)
(72) Inventor: MORIMOTO Masahiro, Tokyo 108-0075 (JP); TAKEDA Hideki, Tokyo 108-0075 (JP); HASUKO Kazumi, Tokyo 108-0075 (JP); HALSKOV Jakob, Tokyo 108-0075 (JP)
(74) Representative: Klunker . Schmitt-Nilson . Hirsch
(86) International application number: PCT/JP2014/057114
(87) International publication number: WO 2015/037263

(57) **Abstract**

In order to improve the accuracy of determination on digital information, a digital information analysis system includes a first classification code receiving unit that receives a first classification code manually granted to target data, a relevance score calculation unit that calculates a relevance score of the target data, a correctness determination unit that determines the correctness of the first classification code based on the relevance score, and a classification code determination unit that determines a classification code to be granted to the target data based on the determination result of the correctness determination unit.

## Description

### BACKGROUND OF THE INVENTION

### FIELD OF THE INVENTION

The present invention relates to a digital information analysis system, a digital information analysis method, and a digital information analysis program, and in particular, to a digital information analysis system, a digital information analysis method, and a digital information analysis program for determining the correctness of a classification code manually granted to a plurality of pieces of target data.

### BACKGROUND ART

In the civil action in the United States, there is an obligation of information disclosure called "Discovery System". This is a system that allows requesting the other party to disclose evidence relevant to the litigation. In particular, the disclosure of electronic data stored in a computer or the like is called "eDiscovery". Under this system, both the plaintiff and the defendant in the lawsuit should submit all pieces of relevant digital information as evidence.

Determination regarding whether or not the digital information is relevant to the litigation has been performed by a human being. That is, a human being has checked the content of digital information piece by piece to determine whether or not the digital information is relevant to the litigation. However, there has been a problem in that it takes too long time for the human being to make a determination for a huge amount of the entirety of digital information.

In order to solve this problem, Japanese Unexamined Patent Application Publication No. 2011-209930 discloses a technique in which only digital document information that a specific person has accessed is extracted from a huge amount of digital information based on the access history information regarding the designated specific person. The extracted digital document information is then further determined by a human being.

In recent years, a technique for automatically determining whether or not the digital information is relevant to the litigation using a computer has been studied. This technique is one in which a computer automatically determines and classifies the digital information based on predetermined criteria. Using this technique, it is possible to significantly reduce the determination time compared with the human determination described above. However, for the accuracy of the determination, a further improvement has been demanded.

### SUMMARY OF THE INVENTION

It is an object of the invention to improve the accuracy of determination on digital information.

According to one aspect of the invention, there is provided a digital information analysis system including: a first classification code receiving unit that receives a first classification code manually granted to target data; a relevance score calculation unit that calculates a relevance score of the target data; a correctness determination unit that determines correctness of the first classification code based on the relevance score; and a classification code determination unit that determines a classification code, which is to be granted to the target data, based on a determination result of the correctness determination unit.

The correctness determination unit may include a threshold value receiving section that receives a threshold value for the relevance score and a comparison determination section that determines the correctness of the first classification code by comparing the relevance score calculated by the relevance score calculation unit with the threshold value.

The classification code determination unit may include a determination verification receiving section that receives a verification result of a determination of the correctness determination unit and a determination section that determines a classification code, which is to be granted to the target data, based on the verification result received by the determination verification receiving section.

The classification code determination unit may further include a second classification code receiving section that receives a second classification code, which is manually granted to the target data, based on the verification result received by the determination verification receiving section.

The relevance score calculation unit may include an extraction section that extracts some of a plurality of pieces of the target data, a classification code receiving section that receives a classification code manually granted to the target data extracted by the extraction section, an analysis section that analyzes the target data based on the classification code received by the classification code receiving section and/or the classification code determined by the classification code determination unit, and a calculation section that calculates a relevance score of the target data based on an analysis result of the analysis section.

According to another aspect of the invention, there is provided a digital information analysis method including: receiving a first classification code manually granted to target data; calculating a relevance score of the target data; determining correctness of the first classification code based on the relevance score; and determining a classification code, which is to be granted to the target data, based on a determination result in the determination of the correctness.

According to still another aspect of the invention, there is provided a digital information analysis program causing a computer to realize: a first classification code receiving function of receiving a first classification code manually granted to target data; a relevance score calculation function of calculating a relevance score of the target data; a correctness determination function of determining correctness of the first classification code based on the relevance score; and a classification code determination function of determining a classification code, which is to be granted to the target data, based on a determination result obtained by using the correctness determination function.

According to the digital information analysis system, the digital information analysis method, and the digital information analysis program according to the aspects of the invention, it is possible to improve the accuracy of determination performed on digital information.

### BRIEF DESCRIPTION OF THE DRAWINGS

Fig. 1 is a block diagram showing the overall configuration of the digital information analysis system of the invention.
Fig. 2 is a block diagram showing the configuration of a correctness determination unit of the digital information analysis system of the invention.
Fig. 3 is a block diagram showing the configuration of a classification code determination unit of the digital information analysis system of the invention.
Fig. 4 is a block diagram showing the configuration of a relevance score calculation unit of the digital information analysis system of the invention.
Fig. 5 is a flowchart showing the overall flow of a digital information analysis method of the invention.
Fig. 6 is a flowchart showing the flow of a correctness determination step in the digital information analysis method of the invention.
Fig. 7 is a flowchart showing the flow of a classification code determination step in the digital information analysis method of the invention.
Fig. 8 is a flowchart showing the flow of a relevance score calculation step in the digital information analysis method of the invention.

### DETAILED DESCRIPTION OF THE INVENTION

A digital information analysis system according to an embodiment of the invention will be described with reference to the accompanying diagrams.

In the present embodiment, a case where target data relevant to a specific matter determined in advance is automatically extracted from a plurality of pieces of target data stored in an information processing apparatus, such as a user terminal or a server, will be described as an example. Here, the specific matter determined in advance is information indicating "relevant to litigation", for example.

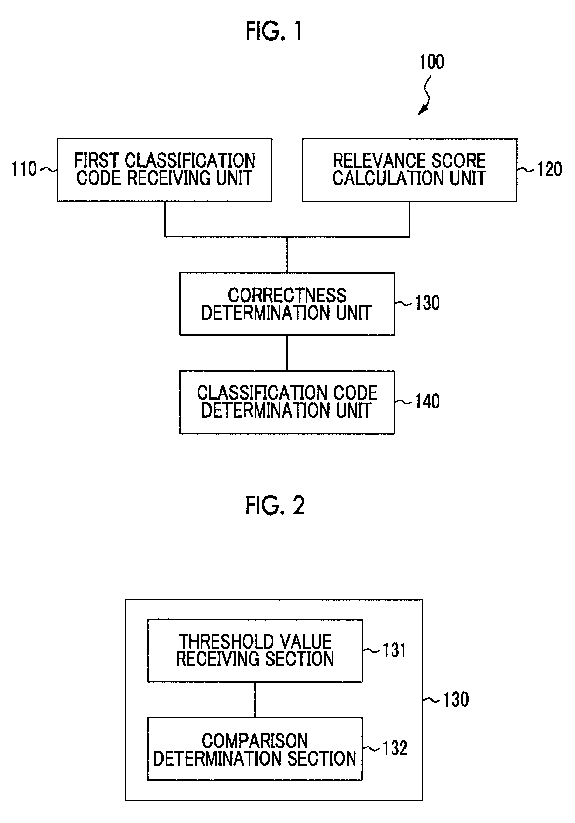

As shown in Fig. 1, a digital information analysis system 100 of the invention includes a first classification code receiving unit 110, a relevance score calculation unit 120, a correctness determination unit 130, and a classification code determination unit 140.

The first classification code receiving unit 110 receives a first classification code manually granted to target data. Here, the target data is digital information such as a document file or e-mail stored in a database or the like. A first classification code grantor checks the content of each piece of target data displayed on a display screen of a display or the like, and grants an appropriate classification code.

The classification code referred to herein is a code, such as "important", "relevant", and "no relevance". For example, "important" means being relevant to the litigation, "relevant" means that there is a possibility of relevance to the litigation, and "no relevance" means that there is no relevance to the litigation. In addition, the granting of the first classification code can be performed through input means, such as a mouse or a keyboard. Here, the classification code granted by the first classification code grantor is called a first classification code. The first classification code is associated with the target data, and is stored in a storage device, such as a memory.

The relevance score calculation unit 120 calculates a relevance score of target data. The relevance score is a value indicating the relevance to the specific matter determined in advance in a certain document, and a high relevance score indicates a high relevance. The relevance score is associated with the target data, and is stored in a storage device, such as a memory. The relevance score can be calculated based on a keyword or a related term included in the target data. This will be described in detail later.

The correctness determination unit 130 determines the correctness of the first classification code based on the relevance score. For example, the correctness determination unit 130 can determine the correctness of the first classification code by comparing the relevance score with the first classification code based on the set threshold value. This will be described in detail later.

The classification code determination unit 140 determines a classification code, which is to be granted to the target data, based on the determination result of the correctness determination unit 130. This will be described in detail later.

Fig. 2 is a block diagram showing the detailed configuration of the correctness determination unit 130. As shown in Fig. 2, it is preferable that the correctness determination unit 130 include a threshold value receiving section 131 and a comparison determination section 132.

The threshold value receiving section 131 can receive a threshold value for the relevance score. It is preferable that the threshold value be appropriately set in advance by the administrator or the like. Hereinafter, an example when the threshold value receiving section 131 receives threshold values X_{H} and X_{N} (X_{N} < X_{H}) will be described.

The comparison determination section 132 can determine the correctness of the first classification code by comparing the relevance score calculated by the relevance score calculation unit 120 with the threshold value.

Specifically, when the relevance score calculated by the relevance score calculation unit 120 is X (X_{H} ≤ X), the comparison determination section 132 compares the relevance score X with the threshold values X_{H} and X_{N}. When the first classification code is "important" or "relevant", the comparison determination section 132 determines that the first classification code is correct. When the first classification code is "no relevance", the comparison determination section 132 determines that the first classification code is incorrect.

On the other hand, when the relevance score calculated by the relevance score calculation unit 120 is X (X ≤ X_{N}), the comparison determination section 132 compares the relevance score X with the threshold values X_{H} and X_{N}. When the first classification code is "important" or "relevant", the comparison determination section 132 determines that the first classification code is incorrect. When the first classification code is "no relevance", the comparison determination section 132 determines that the first classification code is correct.

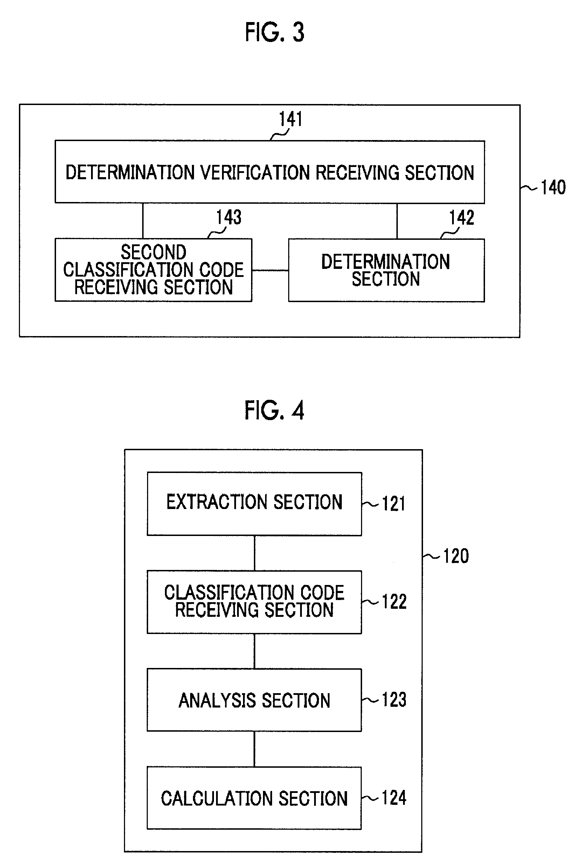

Fig. 3 is a block diagram showing the detailed configuration of the classification code determination unit 140. As shown in Fig. 3, it is preferable that the classification code determination unit 140 include a determination verification receiving section 141 and a determination section 142.

The determination verification receiving section 141 can receive a verification result of the determination of the correctness determination unit 130. Specifically, when the first classification code is determined to be incorrect by the correctness determination unit 130, this determination is verified by a second classification code grantor, which will be described later, and the determination verification receiving section 141 receives this verification result.

The determination section 142 can determine a classification code, which is to be granted to the target data, based on the verification result received by the determination verification receiving section 141. Specifically, when the verification result received by the determination verification receiving section 141 shows that the determination of the correctness determination unit 130 is incorrect, the determination section 142 determines the first classification code as a classification code to be granted to the target data.

In this case, the classification code determined by the classification code determination unit 140 can be used in an analysis section 123 of the relevance score calculation unit 120, which will be described later.

It is preferable that the classification code determination unit 140 further include a second classification code receiving section 143. The second classification code receiving section 143 can receive a second classification code, which is manually granted to the target data, based on the verification result received by the determination verification receiving section 141.

Specifically, when the verification result received by the determination verification receiving section 141 shows that the determination of the correctness determination unit 130 is correct, the second classification code receiving section 143 receives the second classification code manually granted to the target data.

The second classification code grantor checks the content of each piece of target data displayed on a display screen of a display or the like, and grants an appropriate classification code. Here, the classification code granted by the second classification code grantor is called a second classification code. The second classification code is associated with the target data, and is stored in a storage device, such as a memory. Then, the determination section 142 determines the second classification code as a classification code to be granted to the target data.

Fig. 4 is a block diagram showing the detailed configuration of the relevance score calculation unit 120. As shown in Fig. 4, it is preferable that the relevance score calculation unit 120 include an extraction section 121, a classification code receiving section 122, the analysis section 123, and a calculation section 124.

The extraction section 121 can extract some of a plurality of pieces of target data. This extraction may be performed at random, or may be performed by rearranging the target data in order of the creation date or name and selecting a predetermined ratio from above.

The classification code receiving section 122 can receive a classification code manually granted to the target data extracted by the extraction section 121. The classification code grantor checks the content of each piece of target data displayed on a display screen of a display or the like, and grants an appropriate classification code. Here, the classification code granted by the classification code grantor is called a classification code. The classification code is associated with the extracted target data, and is stored in a storage device, such as a memory.

The analysis section 123 can analyze the target data based on the classification code received by the classification code receiving section 122 and/or the classification code determined by the classification code determination unit 140. This analysis is performed by specifying a keyword or a related term corresponding to each classification code, for example. The keyword refers to one word or a combination of a plurality of words. Specifically, if a keyword that is closely related to a specific classification code is included in a document, the classification code may be uniquely determined. For example, when patent infringement litigation has occurred, a patent publication number, a patent attorney, an infringer, and the like can be mentioned as keywords when granting a classification code of "important" to a document that is highly relevant to the litigation. The related term refers to a word, which has an evaluation value equal to or greater than a certain value, of words that frequently appear in common in documents to which a predetermined classification code has been granted. For example, the frequency of appearance refers to a ratio of the appearance of the related term to the total number of words appearing in one document. The evaluation value refers to the amount of information that each word carries in a document, and can be calculated based on the amount of transinformation. In the present embodiment, it is assumed that a morpheme is included in a keyword.

The calculation section 124 can calculate the relevance score of the target data based on the analysis result of the analysis section 123. For example, this calculation is performed based on a keyword or a related term included in the target data. Specifically, the calculation is performed based on the evaluation value of the keyword or the related term and the number of keywords or related terms.

Next, a digital information analysis method according to another embodiment of the invention will be described with reference to the accompanying diagrams.

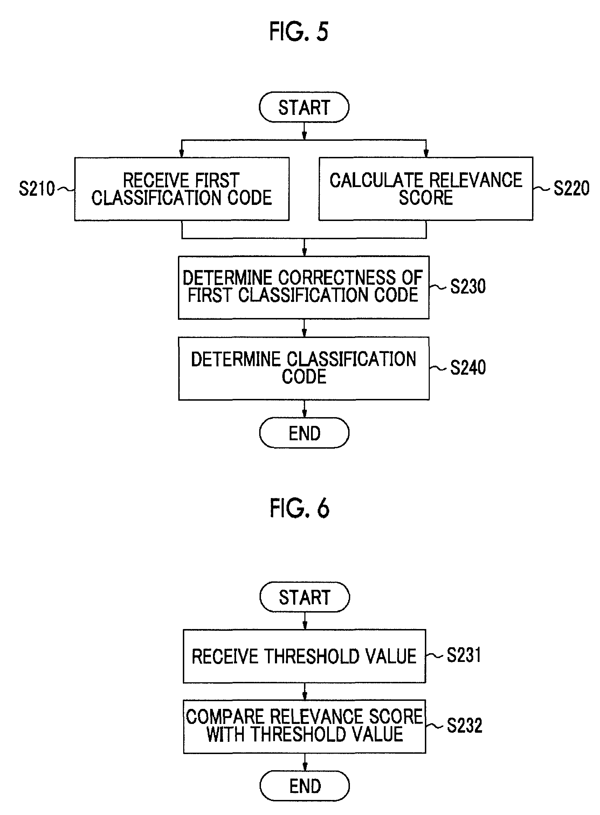

Fig. 5 is a flowchart showing the process flow of the digital information analysis method of the invention.

As shown in Fig. 5, the digital information analysis method of the invention includes a first classification code receiving step (S210), a relevance score calculation step (S220), a correctness determination step (S230), and a classification code determination step (S240).

In the first classification code receiving step (S210), a first classification code manually granted to target data is received. This process can be performed by the first classification code receiving unit described above.

In the relevance score calculation step (S220), the relevance score of the target data is calculated. This process can be performed by the relevance score calculation unit described above.

In the correctness determination step (S230), the correctness of the first classification code is determined based on the relevance score. This process can be performed by the correctness determination unit described above.

In the classification code determination step (S240), a classification code to be granted to the target data is determined based on the determination result in the correctness determination step. This process can be performed by the classification code determination unit described above.

Fig. 6 is a flowchart showing the detailed flow of the correctness determination step (S230) described above. As shown in Fig. 6, it is preferable that the correctness determination step (S230) include a threshold value receiving step (S231) and a comparison determination step (S232).

In the threshold value receiving step (S231), it is possible to receive a threshold value for the relevance score.

In the comparison determination step (S232), it is possible to determine the correctness of the first classification code by comparing the relevance score calculated in the relevance score calculation step (S120) with the threshold value.

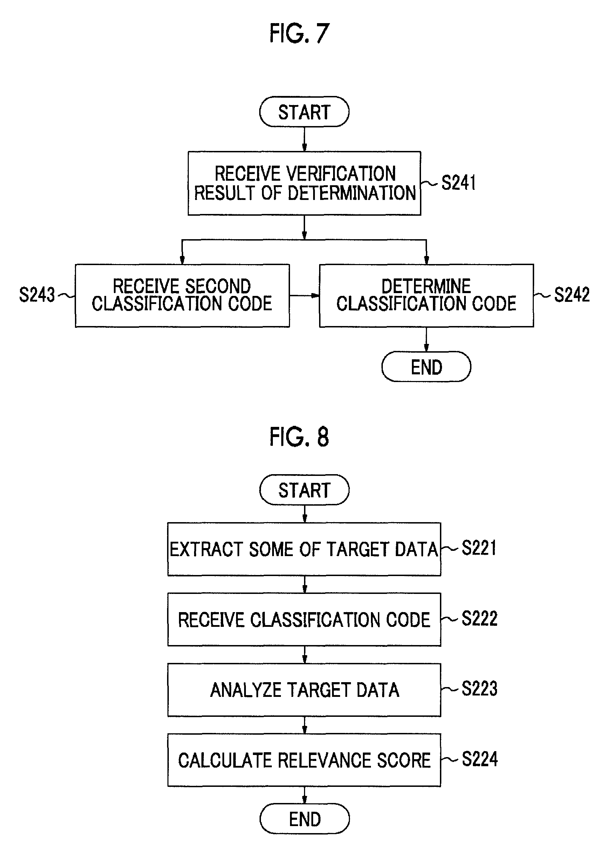

Fig. 7 is a flowchart showing the detailed flow of the classification code determination step (S240) described above. As shown in Fig. 7, it is preferable that the classification code determination step (S240) include a determination verification receiving step (S241) and a determination step (S242).

In the determination verification receiving step (S241), a verification result of the determination in the correctness determination step (S230) can be received.

In the determination step (S242), a classification code to be granted to the target data can be determined based on the verification result received in the determination verification receiving step (S241).

It is preferable that the classification code determination step (S240) further include a second classification code receiving step (S243).

In the second classification code receiving step (S243), a second classification code manually granted to the target data can be received based on the verification result received in the determination verification receiving step (S241). Then, in the determination step (S242), the second classification code is determined as a classification code to be granted to the target data.

Fig. 8 is a flowchart showing the detailed flow of the relevance score calculation step (S220) described above. As shown in Fig. 8, it is preferable that the relevance score calculation step (S220) include an extraction step (S221), a classification code receiving step (S222), an analysis step (S223), and a calculation step (S224).

In the extraction step (S221), some of a plurality of pieces of target data can be extracted.

In the classification code receiving step (S222), a classification code manually granted to the target data extracted in the extraction step (S221) can be received.

In the analysis step (S223), the target data can be analyzed based on the classification code received in the classification code receiving step (S222).

In the calculation step (S224), the relevance score of the target data can be calculated based on the analysis result in the analysis step (S223).

Next, a digital information analysis program according to yet another embodiment of the invention will be described.

The digital information analysis program of the invention causes a computer to realize a first classification code receiving function, a relevance score calculation function, a correctness determination function, and a classification code determination function.

The first classification code receiving function is to receive a first classification code manually granted to target data. This function can be realized by the first classification code receiving unit described above, for example.

The relevance score calculation function is to calculate the relevance score of the target data. This function can be realized by the relevance score calculation unit described above, for example.

The correctness determination function is to determine the correctness of the first classification code based on the relevance score. This function can be realized by the correctness determination unit described above, for example.

The classification code determination function is to determine a classification code, which is to be granted to the target data, based on the determination result obtained by using the correctness determination function. This function can be realized by the classification code determination unit described above, for example.

The digital information analysis program of the invention can be provided after being recorded on a computer-readable recording medium.

In addition, it is preferable that the first classification code grantor, the second classification code grantor, and the classification code grantor described above be different persons. In particular, since it is intended to correct an error, it is preferable that at least the second classification code grantor be a highly specialized person.

In addition, the correctness determination unit may determine the correctness of the first classification code based on a third classification code received by a third classification code receiving unit. In this case, since a human determination is compared with a human determination, the system of the invention can also be used, for example, as means for checking the accuracy of determination of the classification code grantor.

Those described above are exemplary embodiments, and the invention is not limited to these embodiments.

## Claims

1. A digital information analysis system, comprising:
a first classification code receiving unit that receives a first classification code manually granted to target data;
a relevance score calculation unit that calculates a relevance score of the target data;
a correctness determination unit that determines correctness of the first classification code based on the relevance score; and
a classification code determination unit that determines a classification code, which is to be granted to the target data, based on a determination result of the correctness determination unit.

2. The digital information analysis system according to claim 1,
wherein the correctness determination unit includes a threshold value receiving section that receives a threshold value for the relevance score and a comparison determination section that determines the correctness of the first classification code by comparing the relevance score calculated by the relevance score calculation unit with the threshold value.

3. The digital information analysis system according to claim 1 or 2,
wherein the classification code determination unit includes a determination verification receiving section that receives a verification result of a determination of the correctness determination unit and a determination section that determines a classification code, which is to be granted to the target data, based on the verification result received by the determination verification receiving section.

4. The digital information analysis system according to claim 3,
wherein the classification code determination unit further includes a second classification code receiving section that receives a second classification code, which is manually granted to the target data, based on the verification result received by the determination verification receiving section.

5. The digital information analysis system according to any one of claims 1 to 4,
wherein the relevance score calculation unit includes an extraction section that extracts some of a plurality of pieces of the target data, a classification code receiving section that receives a classification code manually granted to the target data extracted by the extraction section, an analysis section that analyzes the target data based on the classification code received by the classification code receiving section and/or the classification code determined by the classification code determination unit, and a calculation section that calculates a relevance score of the target data based on an analysis result of the analysis section.

6. A digital information analysis method, comprising:
receiving a first classification code manually granted to target data;
calculating a relevance score of the target data;
determining correctness of the first classification code based on the relevance score; and
determining a classification code, which is to be granted to the target data, based on a determination result in the determination of the correctness.

7. A digital information analysis program causing a computer to realize:
a first classification code receiving function of receiving a first classification code manually granted to target data;
a relevance score calculation function of calculating a relevance score of the target data;
a correctness determination function of determining correctness of the first classification code based on the relevance score; and
a classification code determination function of determining a classification code, which is to be granted to the target data, based on a determination result obtained by using the correctness determination function.
